Europäisches Patentamt

**European Patent Office**

**Office européen des brevets**

(11) Publication number: **0 190 841**

**A2**

(12) # EUROPEAN PATENT APPLICATION

(21) Application number: **86300366.1**

(22) Date of filing: **20.01.86**

(51) Int. Cl.⁴: **F 16 H 53/02**
**B 23 P 11/02**

(30) Priority: **07.02.85 US 699313**

(43) Date of publication of application:
**13.08.86 Bulletin 86/33**

(84) Designated Contracting States:
**DE FR GB**

(71) Applicant: **GENERAL MOTORS CORPORATION**
**General Motors Building 3044 West Grand Boulevard**
**Detroit Michigan 48202(US)**

(72) Inventor: **Madaffer, Anthony James**
**767 Drummers Lane**
**Brighton Michigan 48116(US)**

(74) Representative: **Denton, Michael John et al,**
**Patent Section - Luton Office (F6) Vauxhall Motors**
**Limited P.O. Box 3 Kimpton Road**
**Luton Bedfordshire LU2 0SY(GB)**

(54) Camshaft assembly and method of manufacture.

(57) A camshaft assembly (10) for an internal combustion engine or the like is formed of an expandable hollow tube (11) and individual preferably hardenable cam and journal elements (12, 14) fixed together by a mechanical expansion of the hollow tube by a mandrel or other device. Material selection and processes for low cost manufacture are disclosed.

Fig. 1

## CAMSHAFT ASSEMBLY AND METHOD OF MANUFACTURE

This invention relates to a camshaft assembly such as may be used for actuating the valve gear of internal combustion engines and the like. More particularly, the invention relates to camshaft assemblies assembled from multiple elements and their methods of manufacture.

Various types of camshaft assemblies for internal combustion engines and the like have been manufactured or proposed to be manufactured by assembling individual components, such as cam elements and journal elements, on a separate shaft with provision for fixing the assembled elements together in predetermined relation, as shown, for example, in US Patent No 4293995. However, various shortcomings exist in the prior art assembled camshaft assemblies and their methods of manufacture which can result in less than desired utility or excessive cost.

The present invention provides camshaft assemblies of multiple elements and methods for manufacturing such camshaft assemblies which provide advantages in the quality of construction and/or simplicity of manufacture over previously known camshaft assemblies and methods of manufacture.

A camshaft assembly and method of manufacture in accordance with the present invention is characterised by the features specified in the characterising portions of Claim 7 and Claim 1 respectively.

A camshaft assembly, according to the invention, includes a plurality of cam and journal elements which are, preferably, formed from high-hardenability steel, for example AISI 5150 or

0190841

equivalent. The journal elements could be made from lower cost material, such as AISI 4140 or equivalent, if high-hardness is not considered necessary. The cam and journal elements are secured to a hollow tube or shaft, preferably of low cost low carbon steel. The camshaft assembly is, preferably, accomplished by locating the various cam and journal elements in proper orientation in a suitable holding fixture and inserting the hollow tube in position within aligned tube receiving openings in these elements. The cam and journal elements are then locked together on the hollow tube by mechanically expanding the hollow tube by cold pressing a mandrel, or other mechanical expander, through its centre. This forces the exterior of the hollow tube into firm engagement with the internal surfaces of the tube receiving openings of the cam and journal elements while inherently strengthening the hollow tube through work hardening and forming therein a uniform smooth sided interior cross-sectional configuration. The tube receiving openings are preferably preconfigured during formation of the cam and journal elements such that they positively lock on the exterior surface of the expanded hollow tube. Preferably the cam and journal elements are cold formed to provide high strength and a central blank is punched out of each element to provide the preconfigured tube-receiving opening.

If desired, the cam elements may be hardened before assembly. Alternatively, they may first be assembled and then have their wearing surfaces hardened such as by laser, electron beam or induction hardening after the camshaft assembly is assembled. In the latter instance, finish grinding of the camshaft assembly is preferably accomplished before hardening with a light lap being the only required finishing step after the hardening process.

The invention provides a high performance low cost camshaft assembly and method of manufacture using commonly available materials which is capable of being easily implemented.

This invention is further described by way of example, with reference to the accompanying drawings, in which:-

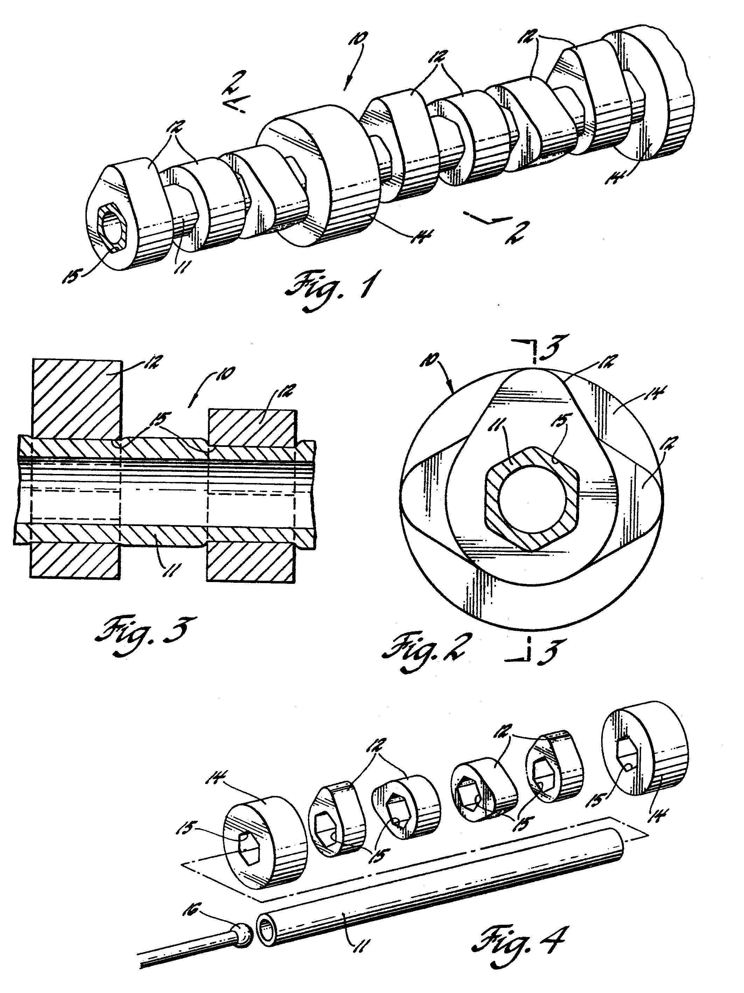

Figure 1 is a pictorial view of a portion of a camshaft assembly of an internal combustion engine formed in accordance with the invention;

Figure 2 is a transverse cross-sectional view through a portion of the camshaft assembly from the plane indicated by the line 2-2 of Figure 1;

Figure 3 is a longitudinal cross-sectional view of a portion of the camshaft assembly from the plane indicated by the line 3-3 of Figure 2;

Figure 4 is an exploded pictorial view illustrating certain elements of the camshaft assembly and its manufacturing method;

Figure 5 is a pictorial view of a holding fixture for orienting the cam and journal elements of the camshaft assembly with the cam and journal elements in position ready for installation of the hollow tube or shaft;

Figure 6 is a cross-sectional view from the plane indicated by the line 6-6 of Figure 5 showing the manner of positioning one of the cam elements; and

Figure 7 is a cross-sectional view from the plane indicated by the line 7-7 of Figure 5 showing the manner of positioning one of the journal elements.

Referring now to the drawings in detail, numeral 10 generally indicates a finished camshaft assembly formed in accordance with the invention. Camshaft assembly 10 includes a hollow tube or shaft 11, preferably formed of ordinary low carbon steel which has been expanded in a manner to be subsequently described. Fixedly positioned on the hollow tube 11 are a plurality of cam elements 12 and journal elements 14, the cam and journal elements being spaced and the cam elements being angularly oriented in predetermined positions for actuating valve gear in an internal combustion engine (not shown) or the like. The cam elements 12 are preferably hardened, either fully or on their wearing surfaces, and the journal elements 14 may be similarly formed or, if desired and their operation permits, may be formed of non-hardened material.

The camshaft assembly 10 provides a lightweight high strength camshaft, by reason of the hollow tubular support (provided by the hollow tube 11) and high strength cam and journal elements 12,14 with hardened surfaces, which is capable of application in internal combustion engines and other similar devices. If desired, other elements such as gears or cams for actuating other devices can be included in the camshaft assembly 10.

The manufacture and assembly of a camshaft assembly 10 in accordance with the invention may include the following steps:

(1) The components of the camshaft assembly 10 requiring hardenable alloy steel material, such as cam lobes, distributor gear, fuel pump eccentric and, optionally, the journal elements, are either cold or warm formed to relatively close tolerances with a small amount of excess material left for grinding and lapping after assembly. The forged, or otherwise formed, blanks of these components are provided with tube receiving openings 15 which are preferably configured in hexagonal or other non-circular configurations adapted to positively lock onto a hollow tube 11 or shaft which is centrally positioned and then expanded.

(2) The hollow tube or shaft 11 is provided consisting of low carbon steel tubing, cold extruded to desired outer and inner diameters and cut to a desired length. The outer diameter is preferably such as to fit closely but easily within the tube receiving openings 15 in the cam, journal and, optionally, other elements 12, 14 and the inner diameter is selected to provide adequate wall strength for manufacture while limiting deformation by mechanical expansion in a manner to be subsequently described.

(3) The individual cam, journal and, optionally, other elements 12, 14 are inserted into a holding fixture 17 (described below) which pre-positions them in their desired final orientations with the tube receiving openings 15 aligned for insertion of the hollow tube 11.

(4) The holding fixture 17 is closed, locking the cam and journal elements 12, 14 in position and the hollow tube 11 is slipped through the aligned tube receiving openings 15 to a predetermined longitudinal position, preferably fixed by a stop, not shown.

(5) A mandrel 16 (Figure 4), ball or other suitable mechanical expander is then cold pressed through the inner diameter of the hollow tube, causing it to expand and form a mechanical bond between the hollow tube and the surrounding components, including the cam journal and, optionally, other elements 12, 14. The mechanical expansion step forces the outer surface of the hollow tube 11 into the preformed hexagonal, or other, configuration of the tube receiving openings 15 to provide a mechanical lock between them. Portions of the hollow tube 11 between the cam and journal elements 12, 14 are expanded beyond the diameter of the tube receiving openings 15 so as to positively lock the cam and journal elements in longitudinal relationship (Figure 3). This method of fixing the cam, journal and, optionally, other elements 12,14 on the hollow tube 11 inherently strengthens the hollow tube through work hardening and forms therein a uniform smooth sided interior cross-sectional configuration, thus providing a very strong assembly capable of maintaining positioning of the cam and journal elements during subsequent machining and, ultimately, in engine operation.

(6) The assembled unfinished camshaft assembly 10 is then removed from the holding fixture 17 and the wearing surfaces of the cam and journal elements 12,14 are ground to final dimensions in conventional manner. At this time other elements, such as a distributor gear or fuel pump eccentric, could also be machined as required. The cam, journal, and, optionally, other elements may then be hardened on their wearing surfaces by laser or electron beam hardening processes.

If desired the cam and, optionally, journal elements 12,14 could be hardened in a furnace or other suitable operation prior to assembly. However, the increased brittleness of hardened elements may be a detriment in subsequent assembly operations which require sufficient strength to resist cracking or significant deformation when the hollow tube 11 is expanded into engagement with the surfaces of the tube receiving openings 15.

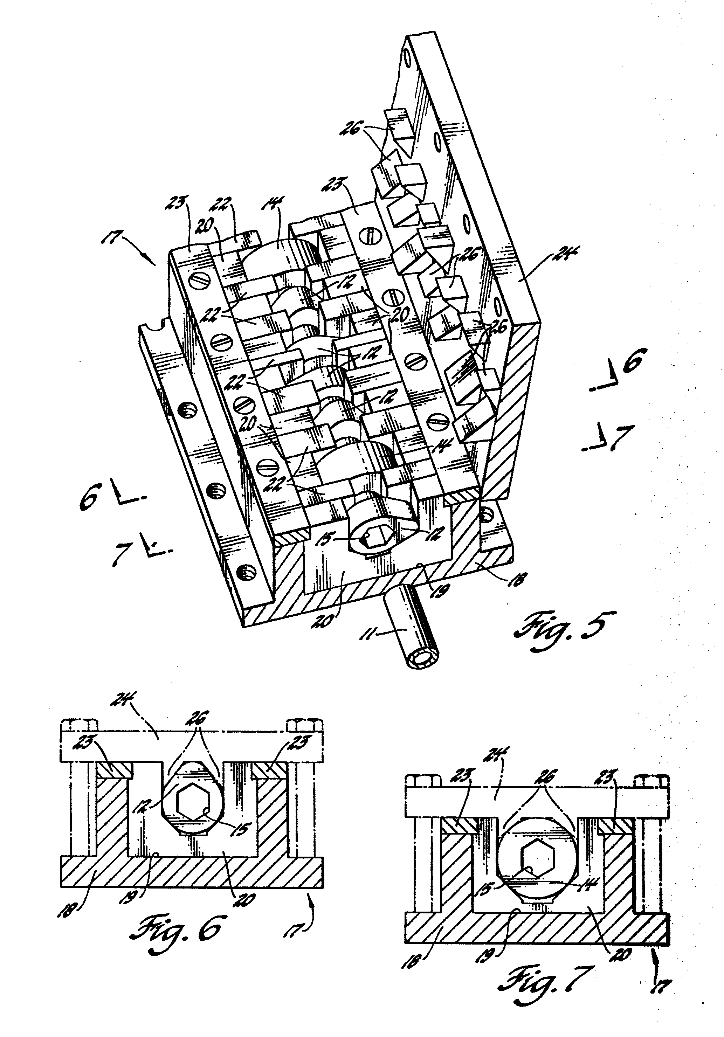

Referring to Figures 5-7, there is shown a holding assembly fixture 17 comprising a base 18 having a longitudinal recess 19 in which are received a plurality of components including supporting and positioning jaws 20 separated by spacers 22 and retained in position by rails 23. A cover 24 having locking protrusions 26 is adapted to close the top of the holding fixture 17 and maintain the cam and journal elements 12, 14 in position therein with their tube receiving openings 15 in axial alignment for insertion of the hollow tube 11.

A camshaft assembly and method of manufacture in accordance with this invention provide the advantages of light weight with relatively simple and low cost manufacture, all in the accordance with the purposes of the invention.

Claims:-

1. A method of manufacturing a camshaft assembly (10) for internal combustion engines and the like, the method including the steps of: providing a plurality of cam elements (12) and journal elements (14), the cam and journal elements each including a tube receiving opening (15), securing the cam and journal elements in predetermined fixed orientation and spacing with the tube receiving openings aligned on a common axis, and inserting a hollow tube (11) into the cam and journal elements in close fitting relation with the tube receiving openings, the method being characterised by expanding the hollow tube into mechanical interference engagement with all the tube receiving openings to secure the cam and journal elements permanently onto the hollow tube in the predetermined orientation while forming within the hollow tube a uniform smooth sided interior cross-sectional configuration by forcing through the hollow tube a mechanical expander (16) sufficiently larger than the inner diameter of the hollow tube to outwardly deform the wall of the hollow tube in the required degree.

2. A method as claimed in Claim 1 wherein the cam and journal elements (12,14) are formed to final dimensions except for finish grinding, the method being characterised by the step of finish grinding the outer surfaces of the cam and journal elements.

3. A method as claimed in Claim 1 or Claim 2 characterised in that the hollow tube (11) is unhardened steel and the cam elements (12) are formed of hardenable steel and are hardened after machining but prior to their assembly with the hollow tube.

4. A method as claimed in Claim 2 or Claim 3, characterised in that the hollow tube (11) is unhardened steel and the cam elements (12) are formed of hardenable steel but are unhardened prior to assembly and grinding, the method further including the step of hardening the surfaces of the cam elements after the finish grinding step.

5. A method as claimed in any one of the preceding Claims, characterised in that the cam elements (12) are forged for high strength.

6. A method as claimed in any one of the preceding Claims, characterised in that the tube receiving openings (15) of the cam elements (12) are non-circular to provide, after expansion of the hollow tube, a high torque capability of the mechanical engagement between the hollow tube shaft and cam elements.

7. A camshaft assembly (10) for internal combustion engines and the like, the camshaft assembly comprising a plurality of cam elements (12) and journal elements (14) each including a tube receiving opening (15), and a hollow tube (11), characterised in that the cam and journal elements are secured in predetermined fixed orientation and spacing, with the tube receiving openings aligned, on the hollow tube which has been mechanically expanded into interference engagement with the tube receiving openings to form within the hollow tube a uniform smooth sided interior cross-sectional configuration and which has portions of the hollow tube exterior between the cam and journal elements expanded diametrically beyond the tube receiving openings to secure the cam and journal elements permanently onto the hollow tube in the predetermined orientation.

8.  A camshaft assembly as claimed in Claim 7, characterised in that the hollow tube (11) is unhardened steel and the cam elements (12) are formed of hardened steel.

9.  A camshaft assembly as claimed in Claim 7 or Claim 8, characterised in that the cam elements (12) are forged for high strength.

10.  A camshaft assembly as claimed in any one of Claims 7 to 9, characterised in that the tube receiving openings (15) of the cam elements (12) are non-circular to provide a high torque capability of the mechanical engagement between the hollow tube (11) and the cam elements.

0190841

Fig. 1

Fig. 3

Fig. 2

Fig. 4

Fig. 5

Fig. 6

Fig. 7